# EUROPÄISCHE PATENTSCHRIFT

(11) **EP 0 999 083 B1**
(45) Veröffentlichungstag und Bekanntmachung des Hinweises auf die Patenterteilung: **12.01.2005**
(21) Anmeldenummer: 99120295.3
(22) Anmeldetag: 12.10.1999
(51) Int. Cl.: B60K 17/22, B60K 17/16, B60K 7/00

(54) **Antriebsachse mit eingebautem Elektromotor**
Vehicle drive axle with built-in electric motor
Axe d'entraînement avec moteur électrique incorporé

(30) Priorität: 27.10.1998 DE 29819114 U
(43) Veröffentlichungstag der Anmeldung: 10.05.2000
(73) Patentinhaber: Röchling Getriebe KG, 49716 Meppen (DE)
(72) Erfinder: Suelmann, Anton, 49716 Meppen (DE); Pleus, Karlheinz, 49779 Oberlangen (DE); Koop, Herbert, 49733 Haren (Ems) (DE)
(74) Vertreter: Busse & Busse Patentanwälte

(56) Entgegenhaltungen:
- EP-A- 0 306 660
- EP-A- 0 602 365
- CH-A- 42 812
- DE-A- 4 300 445
- US-A- 4 244 241
- PATENT ABSTRACTS OF JAPAN vol. 1998, no. 14, 31. Dezember 1998 (1998-12-31) & JP 10 250389 A (NISSAN MOTOR CO LTD), 22. September 1998 (1998-09-22)

## Beschreibung

Die Erfindung bezieht sich auf eine Antriebsachse mit eingebautem Elektromotor, insbesondere Drehstrommotor, als Antriebsaggregat, in einer Ausbildung gemäß dem Oberbegriff des Anspruchs 1.

Bei einem bekannten Getriebe dieser Art (CH-A-42 812) befindet sich ein Erweiterungsteil der Hohlwelle außerhalb des den Elektromotor umschließenden Achsgehäuseteils in einem angrenzenden, zu einem Lager für die Antriebsachse führenden Teil des Achsgehäuses, so daß das Achsgehäuse eine erhebliche Baugröße aufweist.

Die Erfindung befaßt sich mit dem Problem, eine Antriebsachse der eingangs genannten Art zu schaffen, bei der die Hohlwellen-Differentialgetriebeeinheit mit geringem Aufwand kürzer und passgenauer ausführbar ist. Die Erfindung löst das Problem durch eine Antriebsachse mit den Merkmalen des Anspruchs 1. Hinsichtlich weiterer Ausgestaltungen wird auf die Ansprüche 2 und 3 verwiesen.

Die Anordnung des Erweiterungsteils des Achsgehäuses bei der Antriebsachse nach der Erfindung ermöglicht eine kurze Bauweise für das Achsgehäuse, die auch dadurch begünstigt ist, daß der Erweiterungsteil in einem diesem etwa mittig zugeordneten Lager abgestützt ist, das sich dementsprechend ebenfalls innerhalb des den Elektromotor umschließenden Achsgehäuseteils befindet. Durch den an das differentialseitige Ende des den Elektromotor umschließenden Achsgehäuseteils angeschraubten Flanschteil wird das Lager für den Erweiterungsteil abgestützt, das ebenfalls in den den Elektromotor umschließenden Achsgehäuseteil eingreift. Die Ausgestaltung gemäß der Erfindung sichert nicht nur eine kurze Bauweise, sondern auch eine hohe Paßgenauigkeit, welche die Montage der Teile erleichtert.

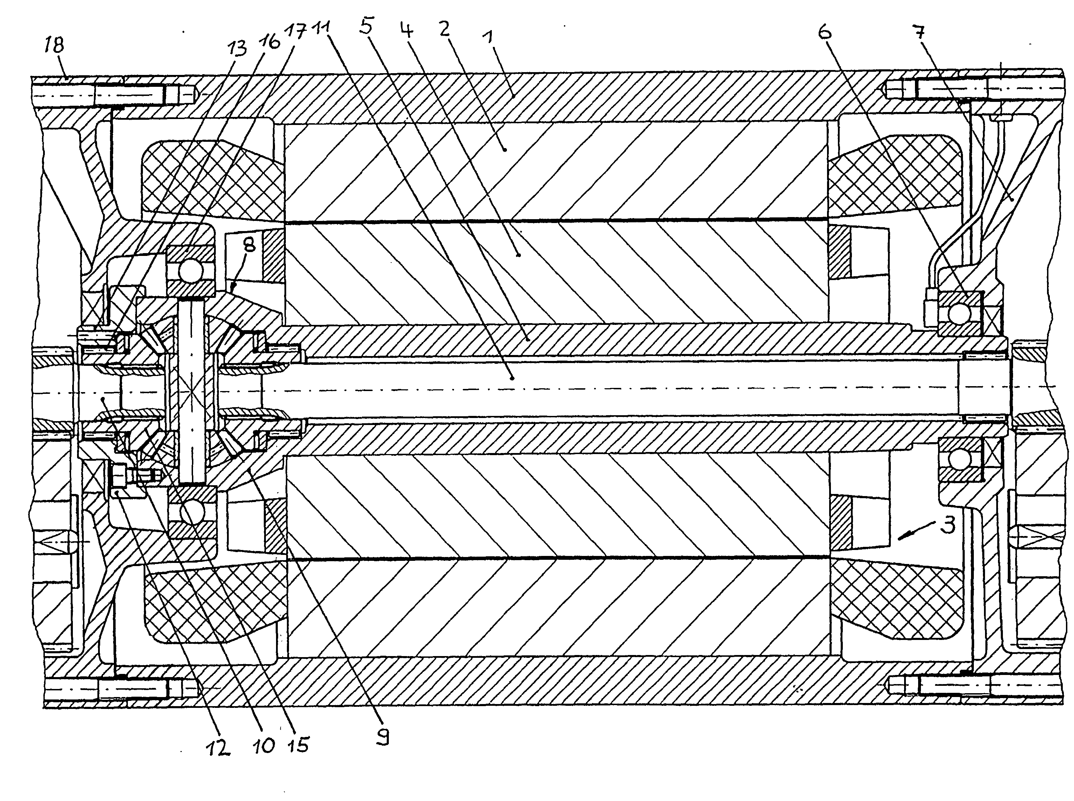

Es ist zwar bekannt (Patent Abstracts of Japan vol. 1998, no. 14, 31. Dezember 1998) das Differentialgetriebegehäusemit einer mittigen Lagerung zu versehen, jedoch dienst diese Lagerung dazu, einen Befestigungsbolzen entbehrlich zu machen und zugleich eine Welle einsetzen zu können, der endseitig die Lagerung zugeordnet sind. Ferner ist es aus der EP-A-0 602 365 ein Differentialgetriebe bekannt, dessen Gehäuse stimseitig Abschlußteile aufweist, jedoch dienen diese nicht zuletzt in Ermangelung eines Erweiterungsteils nicht der Abdichtung der Hohlwellen-Differentialgetriebeeinheit gegenüber dem im gleichen Achsgehäuseteil angeordneten Elektromotor. Weitere Einzelheiten und Wirkungen ergeben sich aus der nachfolgenden Beschreibung und der Zeichnung, die ein Ausführungsbeispiel des Gegenstands der Erfindung in einem an beiden Seiten abgebrochenen Axialschnitt durch die Antriebsachse veranschaulicht.

Die in der Zeichnung dargestellte Antriebsachse umfaßt ein im wesentlichen rohrförmiges Achsgehäuse 1, das mit dem Stator 2 eines Drehstrommotors 3 verbunden ist. Der Rotor 4 des Drehstrommotors 3 ist mit einer den Rotor 4 axial durchgreifenden Hohlwelle 5 verbunden, die an ihrem in der Zeichnung rechten Ende mittels eines Lagers 6 an einem Flanschteil 7 abgestützt ist, das mit dem Achsgehäuse 1 verschraubt ist.

An ihrem anderen, in der Zeichnung linken Ende ist der Hohlwelle ein Differentialgetriebe 8 zugeordnet, dessen Gehäuse von der Hohlwelle 5 angetrieben ist. Die Abtriebswellen 10,11 des Differentialgetriebes 8 treiben der Antriebsachse auf beiden Seiten zugeordnete, nicht dargestellte Räder an. Antriebsachsen dieser Art finden vornehmlich in Elektrofahrzeugen, beispielsweise Gabelhubstaplern, Anwendung.

Das Gehäuse des Differentialgetriebes 8 wird von einem Erweiterungsteil 9 der Hohlwelle 5 gebildet, der einstückig mit der Hohlwelle 5 angeformt ist. Der innerhalb des den Elektromotor 3 umschließenden Achsgehäuses 1 gelegene Erweiterungsteil 9 der Hohlwelle 5 ist auf seiner der Hohlwelle 5 abgewandten Seite mit einem Abschlußteil 12 verbunden, beispielsweise verschraubt. Das Abschlußteil 12 weist an seinem den Erweiterungsteil 9 der Hohlwelle 5 abgewandten Seite einen Bund 13 auf, in dem ein Lager 16 angeordnet ist. Das Abschlußteil 12 lagert mittels des Lagers 16 ein Kegelrad 15 des Differentialgetriebes 8 und über dieses Kegelrad 15 gleichzeitig die als Stirnritzelwelle ausgebildete Abtriebswelle 10 des Differentialgetriebes 8.

Der das Gehäuse des Differentialgetriebes 8 bildende Erweiterungsteil 9 der Hohlwelle 5 ist in einem Lager 17 abgestützt, das dem Erweiterungsteil 9 etwa mittig zugeordnet ist. Dieses Lager 17 ist in einem Flanschteil 18 abgestützt, das mit dem differentialseitigen Ende des Achsgehäuses 1 verschraubt ist. Dementsprechend ist eine einfache Montage und Demontage der Teile der Antriebsachse bei zugleich raumsparender Bauweise gewährleistet.

## Patentansprüche

1. Antriebsachse mit einem eingebauten Elektromotor (3), insbesondere Drehstrommotor, als Antriebsaggregat, dessen Stator (2) mit einem die Antriebsachse kappselnden Achsgehäuse (1) und dessen Rotor (4) mit einer den Rotor (4) axial durchgreifenden Hohlwelle (5) verbunden ist, und mit einem Differentialgetriebe (8), dessen Gehäuse (9) einem Ende der Hohlwelle (5) zugeordnet und von diesem angetrieben ist und dessen Abtriebswellen (10,11) der Antriebsachse auf beiden Seiten zugeordnete Räder antreiben, wobei das dem Differentialgetriebe (8) zugewandte Ende der Hohlwelle (5) einen einstückig ausgeformten, zumindest den Hauptteil des Gehäuses des Differentialgetriebes (8) bildenden Erweiterungsteil (9) aufweist, **dadurch gekennzeichnet, daß** der Erweiterungsteil (8) der Hohlwelle (5) innerhalb des den Elektromotor (3) umschließenden Achsgehäuseteils (1) gelegen und in einem Lager (17) abgestützt ist, das dem Erweiterungsteil (9) etwa mittig zugeordnet ist, wobei das differentialseitige Ende des den Elektromotor (3) umschließenden Achsgehäuseteils (1) mit einem angeschraubten Flanschteil (18) versehen ist, das das Lager (17) für den Erweiterungsteil (9) abstützt.

2. Antriebsachse nach Anspruch 1, **dadurch gekennzeichnet, daß** der vom Erweiterungsteil der Hohlwelle (5) gebildete Teil des Differentiaigetriebegehäuses (9) auf seiner der Hohlwelle (5) abgewandten Seite mit einem Abschlußteil (12) verbunden ist.

3. Antriebsachse nach Anspruch 2, **dadurch gekennzeichnet, daß** das Abschlußteil (12) des Erweiterungsteils (9) ein Kegelrad (15) des Differentialgetriebes (8) mittels eines Lagers (16) abstützt, das zugleich eine anschließende Stirnritzelwelle (10) lagert.

## Claims

1. Drive axle having, as a drive unit, a built-in electric motor (3), and particularly a three-phase motor, whose stator (2) is connected to an axle housing (1) enclosing the drive axle (1) and whose rotor (4) is connected to a hollow shaft (5) which passes through the rotor (4) axially, and having a differential gearbox (8) whose housing (9) is associated with one end of the hollow shaft (5) and is driven thereby and whose output shafts (10, 11) drive wheels which are associated with the drive axle on both sides, that end of the hollow shaft (5) which is adjacent the differential gearbox (8) having an integrally formed extension piece (9) which forms at least the main part of the housing of the differential gearbox (8), **characterised in that** the extension piece (8) of the hollow shaft (5) is situated inside the axle housing part (1) surrounding the electric motor (3) and is supported in a bearing (17) which is associated approximately centrally with the extension piece (9), that end ofthe axle housing part (1) surrounding the electric motor (3) which is closer to the differential being provided with a screwed-on flange member (18) which supports the bearing for the extension piece (9).

2. Drive shaft according to claim 1, **characterised in that** that part of the housing (9) of the differential gearbox which is formed by the extension piece of the hollow shaft (5) is connected at its end remote from the hollow shaft (5) to a terminating part (12).

3. Drive shaft according to claim 2, **characterised in that** the terminating part (12) of the extension piece (9) supports a bevel gear (15) in the differential gearbox (8) by means of a bearing (16) which at the same time acts as a bearing for a spur-pinion shaft (10) which follows on.

## Revendications

1. °) Essieu moteur comprenant :
un moteur électrique (3) incorporé, notamment un moteur à courant triphasé, pour donner un ensemble d'entraînement dont le stator (2) est relié à un boîtier d'essieu (1) encapsulant l'essieu moteur, et dont le rotor (4) est relié à un arbre creux (5) traversant axialement le rotor (4),
un mécanisme différentiel (8) dont le boîtier (9) est associé à une extrémité de l'arbre creux (5) en étant entraîné par celui-ci et dont les arbres de sortie (10, 11) de l'essieu moteur entraînent des roues associées à l'essieu moteur des deux côtés,
l'extrémité de l'arbre creux (5) située du côté du mécanisme différentiel (8) présente une partie élargie (9) réalisée monobloc et formant au moins la partie principale du boîtier du mécanisme différentiel (8),
**caractérisé en ce que**
la partie élargie (9) de l'arbre creux (5) se trouve à l'intérieur de la partie de boîtier d'essieu entourant le moteur électrique (3) et est en appui dans un palier (17) disposée vers le milieu de cette partie élargie, et l'extrémité, située du côté du différentiel de la partie du boîtier (1) entourant le moteur électrique (3), est équipée d'une partie de bride (18) vissée, qui soutient le palier (17) d'appui de la partie élargie (9).

2. Essieu moteur selon la revendication 1,
**caractérisé en ce que**
la partie du boîtier de différentiel formée par la partie élargie (9) de l'arbre creux (5) est, du côté éloigné de cet arbre, reliée à une partie de fermeture (12).

3. Essieu moteur selon la revendication 2,
**caractérisé en ce que**
la partie de fermeture (12) de la partie élargie (9) soutient un pignon conique (15) du mécanisme différentiel (8) au moyen d'un palier (16) qui soutient également un arbre de pignon frontal (10) lui faisant suite.
